# EUROPEAN PATENT SPECIFICATION

(11) **EP 3 470 744 B1**
(45) Date of publication and mention of the grant of the patent: **26.08.2020**
(21) Application number: 18198959.1
(22) Date of filing: 05.10.2018
(51) Int. Cl.: F24D 17/00, F24D 19/10, F28D 20/00

(54) **CONTROL METHOD FOR A HOUSEHOLD WATER HEATING UNIT HAVING A THERMAL ACCUMULATOR**
STEUERUNGSVERFAHREN FÜR EIN HAUSHALTSWASSERHEIZGERÄT MIT THERMISCHEM AKKUMULATOR
PROCÉDÉ DE COMMANDE POUR UNE UNITÉ DE CHAUFFAGE D'EAU DOMESTIQUE AYANT UN ACCUMULATEUR THERMIQUE

(30) Priority: 12.10.2017 IT 201700114975
(43) Date of publication of application: 17.04.2019
(73) Proprietor: Adsum S.r.l., 63100 Ascoli Piceno (IT)
(72) Inventor: LOLLI, Sergio, 63100 Ascoli Piceno (IT)
(74) Representative: Mola, Edoardo

(56) References cited:
- EP-A1- 2 570 737
- EP-A1- 3 043 122
- EP-A2- 2 416 073

## Description

The present invention relates to a method of regulating a heating unit for household water comprising a heat accumulator.

### STATE OF THE ART

A need is felt to control the heating of household water to reduce energy consumption without decreasing the level of comfort for the user. In particular, the use of hot water can be highly discontinuous during the day, during a week between weekdays and holidays and during the year depending on the seasons. It is preferable to optimize the energy consumption and at the same time make the amount of hot water requested by the user always available, evenin periods of peak demand. The hot water generated by the heating unit is supplied as water for household facilities such as household toilets and sports facilities or gyms, and for recreational services such as swimming pools, hot tubs or recreational stations with artificial heated water basins. More generally, all uses can be considered for which the maximum temperature of the hot water leaving the heating unit does not exceed 70 °.

It is known from WO-A1-2014141146 to control an accumulator according to a first mode in which the thermal gradient in the vertical direction tends to zero and a heat generator transfers the maximum power to the accumulator fluid. This mode is particularly suitable during a time slot in which a massive withdrawal of hot water is expected from the user.

The known accumulator is also controlled to achieve a second mode in which the temperature of the fluid in the accumulator is that resulting from use in the zone of maximum efficiency of a heat generator associated with the accumulator. In particular, a flow is taken from an intermediate zone of the accumulator at a temperature which does not exceed a predetermined threshold, lower than a temperature set for the first mode described above, and is sent to the heat generator. This also causes to heat a lower volume of water. This method is adopted in a time slot where a minimum hot water demand is expected from the users.

However, it may happen that unexpected withdrawals occur and are not compatible with the operating conditions of the heating unit acting automatically during the pre-established time slot, for example by means of a timer. Such peaks can excessively lower the temperature inside the accumulator and, therefore, prevent the unit from generating hot water at the desired temperature.

EP-A1-3043122 discloses a control method for a water heating system wherein a first and a second check are operated to verify sufficiency of hot water for a first and second use respectively. If hot water is not sufficient, hot water in the accumulator as a whole is heated.

### SCOPES AND BRIEF DESCRIPTION OF THE INVENTION

The scope of the present invention is to provide a method for controlling a household hot water heating unit capable of satisfying at least partially the requirements specified above.

The object of the present invention is achieved by a method for heating household hot water which allows the partialisation of a fluid reservoir heated by a heat source from a first and second sub-volumes to the first sub-volume upon the occurrence of a limit condition, function of the time course or of the value of the sampling temperature from the accumulator and representative of a delay in the thermal increase of the fluid in the collecting point of the accumulator in the second sub-volume, arranged at a vertical dimension lower than that of the first under - volume.

Furthermore, starting from a functioning state of the heating unit such that:
- a heat generator is active to heat a recirculation flow that is adducted through a heat exchanger;
- the recirculation flow is adducted through a first and a second sub-volume of an accumulator via a recirculation circuit and a selector assembly so as to bring a withdrawal temperature of the second sub-volume, monitored by a sensor of a plurality of sensors, to a first predetermined value, being a first temperature threshold; the method includes the step of:
- when a limit condition is verified, based on time history of the withdrawal temperature value, representative of a delay in the fluid thermal rise at the withdrawal point in the second sub-volume, located in a lower vertical position than that of the first sub-volume, the limit condition being a delay of the withdrawal temperature to reach the first temperature threshold at the withdrawal point in the second sub-volume, switch the selecting unit in a position such to exclude the second sub-volume of the accumulator from the recirculation circuit such that thermal power exchanged with the heat generator is directed to the first sub-volume.

Therefore, in case of peak demand of hot water from the user, which could excessively cool the inside of the accumulator, the heating unit reacts to bring it to the desired temperature, i.e. at the first predetermined threshold, by monitoring with a relative sensor, a sub-volume having a smaller overall dimension with respect to that of the initial volume, in particular the sub-volume from which the heated flow is withdrawn to satisfy the need of the user. By the method of the present invention it is possible to swiftly recover the desired temperature so that, even shortly after a peak anomalous demand, the user can receive hot water at the desired temperature.

The heating unit can also operate in a second mode such that the heat generator and the flow in the recirculation circuit are active until a second predetermined temperature threshold higher than the first temperature threshold is reached at the point of withdrawal from the accumulator. The first predetermined threshold corresponds to a condition of maximum efficiency of the heat generator and the second predetermined threshold corresponds to the maximum accumulation of thermal energy in one or more of the sub-volumes of the accumulator. Also in the second mode of operation, a lower sub-volume can be excluded from the recirculation circuit, upon reaching a limit condition similar to that described above, so as to concentrate the thermal energy in a higher sub-volume.

Other advantages and features of the present invention are discussed in the description and cited in the dependent claims.

### BRIEF DESCRIPTION OF THE DRAWINGS

The invention is described below on the basis of non-limiting examples illustrated for explanatory purposes in the attached drawing, which refers to a circuit diagram of a heating unit according to the present invention.

### DETAILED DESCRIPTION OF THE INVENTION

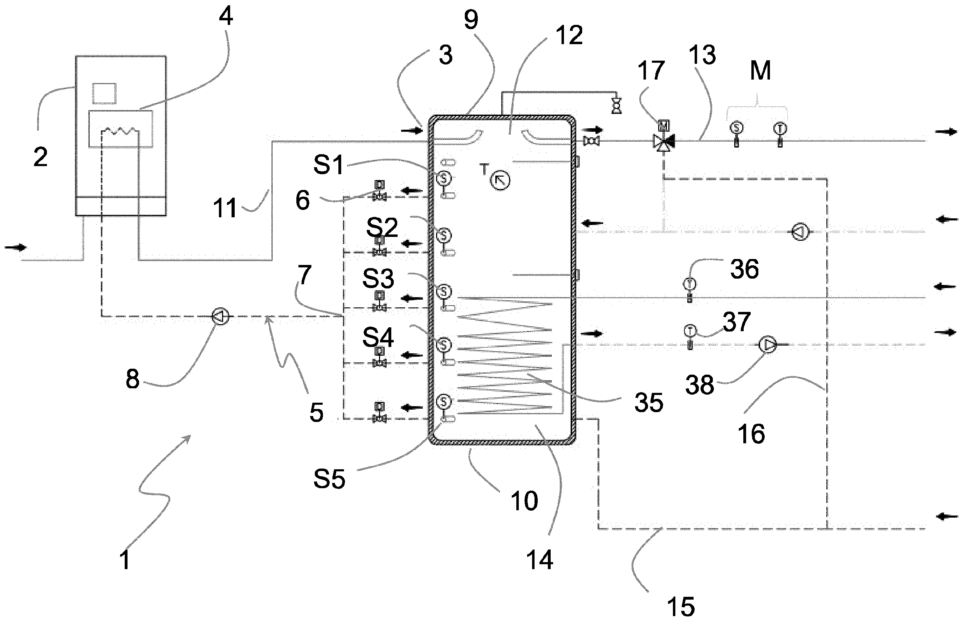

Figure 1 shows as a whole a heating unit comprising a heat generator 2, a fluid accumulator 3 and a heat exchanger 4 in which thermal power is transferred from the heat generator 2 to a liquid fluid accumulated in the accumulator 3. A circuit 5 provides a recirculation flow between the accumulator 3 and the heat exchanger 4. According to an exemplary embodiment, the heat exchanger 4 is exhausted fluid / liquid fluid for transferring the heat output of a condensing boiler, which acts as a heat generator 2.

The heat accumulator 3 has a vertical dimension to allow the thermal stratification of the carrier fluid circulating in the circuit 5. According to the embodiment illustrated in the figure, the carrier fluid is household water. The household water stratifies on the basis of the vertical thermal gradient inside the accumulator 3 and the colder layers are in the lower zone while those at a higher temperature are in the upper zone. Circuit 5 comprises a selector assembly 6 connected to accumulator 3 in a plurality of vertically spaced apart withdrawal points, preferably equidistant, and converging towards an outlet node 7 connected to an inlet of the exchanger 4, preferably via a pump 8.

Each withdrawal point of the selector assembly 6 draws water from a different accumulation layer or sub-volume, each of which is delimited by horizontal planes passing through two adjacent withdrawal points or, where necessary, from a head wall 9 or a bottom wall 10 of accumulator 3.

An outlet of the heat exchanger 4 is connected via a conduit 11 to a head sub-volume 12 in heat accumulator 3 so that the household water enters the warmest layer of the heat accumulator 3. The flow rate of household water leaving heat accumulator 3 towards heat exchanger 4 is controlled by one or more valves of the selector assembly 6. According to the embodiment of figure 1, the valves are one for each withdrawal point and are discrete on-off valves, i.e. open or closed. It is, however, possible to provide alternatively a selector valve having an outlet towards exchanger 4 and a number of inputs equal to the number of withdrawal points. In each working position, the selector unit 6 connects a single withdrawal point to heat exchanger 4 and closes all the others.

In order to detect the thermal gradient in the vertical direction, temperature sensors are provided, in particular a number of sensors equal to the withdrawal points of accumulator 3, in the exemplary embodiment S1, S2, S3, S4, S5 mounted to detect the temperature of the fluid inside heat accumulator 3 at different vertical levels and in a position in which the detected temperature is representative of that at the withdrawal point.

Head sub-volume 12 supplies the household hot water user device, for example showers in a gym, through a duct 13 and a bottom sub-volume 14 receives household water from a pressurized distribution network, for example from the urban distribution network of drinking water, via a duct 15. Conduits 13, 15 are connected to each other by a bypass 16 arranged parallel to the accumulator 3. The flow supplied by the bypass 16 is controlled by a mixing valve 17 which mixes the high temperature flow from head sub-volume 12 with the water flow of the distribution network to obtain the desired temperature.

In particular, mixing valve 17 is controlled so as to maintain the outlet flow temperature at a temperature lower than a pre-determined temperature based on the user device, e.g. showers, sauna, whirlpool etc. The pressure of the distribution water supply network provides the necessary pressure to generate the flow that is adducted through mixing valve 17 and goes towards the user device.

Preferably, the action of mixing valve 17 is controlled on the basis of a sensor M for measuring the temperature T and the flow F in conduit 13 to detect the hot water demand by the end user and to verify the temperature at which this water is provided.

According to the present invention, heating unit 1 is controlled as follows by a control unit for driving pump 8, selector assembly 6 and mixing valve 17 on the basis of the signals of the sensors S1, S2, S3, S4, S5 T, F.

In particular, the control unit (not shown) is programmed according to a first operating mode in which the temperature of the fluid in accumulator 3 is that resulting from use in the zone of maximum efficiency of the heat generator 2. For example, if heat generator 2 is a condensing boiler and heat exchanger 4 is designed, for example, for a temperature drop of 15 °, the temperature of the inlet to heat exchanger 4 is to be kept as low as possible, compatibly with the need to maintain the accumulator at a sufficiently high temperature. According to an embodiment such compromise leads to a temperature of 50 °.

This value keeps the efficiency of heat generator 2 high and at the same time guarantees a sufficiently high temperature of the hot water required by the user. Pump 8 and selector assembly 7 are consequently controlled to control a flow circulating in the recirculation circuit 5 such as to maintain this condition.

For example, it is possible to divide the accumulator 3 into a first sub-volume up to the sensor S3 and a second sub-volume up to the bottom wall 10. In the condition of minimum energy consumption and maximum efficiency of heat generator 2, the flow of recirculation passes through the first sub-volume and the second sub-volume is substantially at rest. The inlet temperature of heat exchanger 4 is measured by S3 and all the withdrawal points are closed except for that at S3. This condition is preferably implemented by the control unit when, in a preventive manner, for example by means of a timer, a time slot is set in which the use of hot water on the consumer side is minimal.

Always in a preventive way, it is possible to estimate a condition of intermediate energy consumption and maximum efficiency of heat generator 2, in which also the second volume is involved by the recirculation flow, the input temperature of heat exchanger 4 is measured by S5 and all withdrawal points are closed except for that at S5. At each withdrawal by the user, water is reintegrated from the distribution network, which has an exemplary temperature of between 10 ° and 20°, depending on the season. As long as S5 does not detect the temperature of 50°, the efficiency of the condensing boiler is further increased.

However, the temperature of 50° is optimal as it allows to reach the desired temperature, for example about 65°, in the head sub-volume 12. However, if the temperature S5, whose time course is monitored, does not reach 50° for a predetermined time or, more generally, in the occurrence of a limit condition, a function of the time course of the withdrawal temperature and representative of a delay in the thermal increase of the water withdrawn by the selector 6, since the actual withdrawal by the user device is relatively high, the control unit switches the selector assembly 6 to reduce the sub-volume involved by the flow rate of the recirculation circuit 5 so that the amount of water heated by heat generator 2 is fed into a smaller sub-volume and, therefore, allows the withdrawal temperature to increase more rapidly despite the withdrawal of the user. The withdrawal temperature of the sub-volume is still monitored by a sensor of the plurality of sensors. The switching of the recirculation circuit is therefore a reaction of the control unit to an anomalous, in particular excessive, household hot water demand for the pre-set operating conditions of the heating unit. In particular, when the withdrawal temperature delays to reach the predefined threshold of 50°, this means that the demand for domestic hot water is higher than that provide by the accumulator in conditions of maximum efficiency of heat generator 2 when both sub-volumes are included in the recirculation circuit and a certain amount of thermal energy has already been taken to satisfy the user.

The above can also be implemented by subdividing the accumulator 3 into three or more sub-volumes through the selector assembly 6. In each of these cases, head sub-volume 12, from which the high temperature fluid flow exits for serving the user device remains part of the recirculation circuit 5 if the withdrawal temperature of an underlying sub-volume is late in reaching the predefined threshold. The head sub-volume 12 can comprise not only the withdrawal point corresponding to sensor S1 but also further lower sub-volumes based on the design conditions. Moreover, heating unit 1 can be controlled in a further mode such as to accumulate the maximum thermal energy in accumulator 3, so as to be ready beforehand to satisfy a massive request for household hot water in a given time slot In this condition, heat generator 2 and pump 8 are active until the withdrawal temperature from accumulator 3 towards heat exchanger 4 reaches a second predefined threshold, greater than the first one. For example, the second default threshold is 60° C. This implies that, in corresponding layers, the temperatures in this additional mode are greater than those described with reference to the use in conditions of maximum efficiency of heat generator 2.

Even in the maximum heat storage mode it is possible to segment accumulator 3 into two or more sub-volumes and to exclude one or more sub-volumes from recirculation circuit 5 and involve sub-volumes arranged above if, while the user requires hot water, a limit condition occurs as a function of the time course of the withdrawal temperature and representative of a delay in the thermal increase of the water withdrawn from selector group 6. Alternatively, the exclusion of lower sub-volumes can be automatically started if the withdrawal temperature reaches a third minimum temperature threshold, lower than both the first and second threshold, for example 15°.

An example of how the maximum thermal storage mode works is as follows. Based on a pre-set forecast, for example by means of a timer, pump 8 and heat generator 2 are activated to bring the withdrawal temperature, for example S5, to the second threshold, 60° C. If during this transient there was a peak request from the user and the previously defined limit condition occurs, selector 6 would be switched so as to exclude the bottom sub-volume 14 and, possibly, also the sub-volume immediately higher, so as to delimit the sub-volumes involved by the recirculation flow to the corresponding vertical dimension, for example, to the sensor S3. This makes it possible to bring the area from which high temperature fluid is withdrawn to the desired temperature more quickly, or immediately after a peak request from the user.

Heating unit 1 optionally comprises a coil 35 provided inside accumulator 3 and extending in a vertical direction starting from bottom wall 10 up to about the vertical position of the sensor S3.

Coil 35 heats the water through the thermal power generated by a plant using renewable sources, such as a solar thermal system or heat pump recovery. The inlet and outlet temperature of a further carrier fluid adducted by serpentine 35 are measured by respective sensors 36 and 37 and the flow circulating in the coil is controlled by an electric pump 38.

In use, coil 35 can heat the water in accumulator 3 also to overcome the first threshold at the withdrawal point monitored by S5. In this case, pump 8 is activated without the activation of heat generator 2 to send the water from the bottom sub-volume 14 to head sub-volume 12. In this case the heat production due to the solar plant temperature is kept inside accumulator 3 so as to maintain an intermediate zone at a relatively low temperature.

Finally, it is clear that modifications or variations can be made to the heating unit described and illustrated here without departing from the scope of protection as defined in the attached claims.

According to an alternative embodiment, the fluid in accumulator 3 and in circuit 5 is a technical fluid and the heating unit includes, in a manner not shown, an exchanger towards the hot water user having a primary branch connected to accumulator 3 and a secondary branch connected to the user device. In the primary branch the technical fluid circulates in a closed circuit with the accumulator and with circuit 5 and in the secondary branch circulates household hot water which receives thermal power from the technical fluid. For example, the heat exchanger to the user can be a plate exchanger.

It is also possible that circuit 5, in place of exchanger 4, comprises a liquid / liquid exchanger having a connectable primary branch or a boiler or a hot water distribution network, such as a district heating network and a secondary branch connected in a closed circuit with the accumulator and with the exchanger towards the user described in the previous paragraph.

According to an alternative embodiment of the present invention, heating unit 1 is mounted on a frame so as to define a transportable module on an industrial vehicle with a coffersam and which can be easily installed. The ducts are provided with releasable connections, for example flanged, in order to be connected to: thermal power supply ducts, for example by means of a condensing boiler; high temperature sanitary utilities, for example showers; sanitary use at a lower temperature, for example a whirlpool; and solar thermal system.

## Claims

1. Control method for heating household water, comprising the steps of:
- Providing a household heating unit (1) comprising a first heat exchanger (4) in heat exchange with a heat generator (2), an accumulator (3) for a fluid heated by the heat generator (2) to satisfy the request of a household hot water by a user and connected via a recirculation circuit (5) to the heat exchanger (4), a selecting unit (6) having an output connected to the heat exchanger (4) and inputs connected in at least two withdrawal points distanced along the vertical direction to define respective first and second overlappable sub-volumes of the accumulator (3), each of which is delimited by the respective withdrawal point, a plurality of temperature sensors (S1, S2, S3, S4, S5) distanced along the vertical direction in the accumulator (3) to measure the temperature in the withdrawal points, a heated flow to satisfy a user of hot household water exiting the first sub-volume,
- Reaching a status of the heating unit (1) wherein:
- The heat generator (2) is active to heat a recirculating flow through the heat generator (2);
- The recirculating flow flows through the first and second sub-volumes of the accumulator (3) via the recirculation circuit (5) and the selecting unit (6) to bring the withdrawal temperature of the second sub-volume, monitored via a sensor from the plurality of sensors, to a first predefined value, being a first temperature threshold;
- When a limit condition is verified, based on time history of the withdrawal temperature value, representative of a delay in the fluid thermal rise at the withdrawal point in the second sub-volume, located in a lower vertical position than that of the first sub-volume, the limit condition being a delay of the withdrawal temperature to reach the first temperature threshold at the withdrawal point in the second sub-volume, switch the selecting unit (6) in a position such to exclude the second sub-volume of the accumulator (3) from the recirculation circuit (5) such that thermal power exchanged with the heat generator (2) is directed to the first sub-volume.

2. Method according to claim 1, comprising the steps of:
- Keep recirculating the flow in the recirculation circuit (5) and the heat generator (2) active until the withdrawal temperature of the selecting unit (6) reaches a second temperature threshold greater than the first temperature threshold.

3. Method according to claim 2, comprising the step of:
- switching the selecting unit (6) in a further position such to exclude from the recirculation circuit (5) a lower sub-volume of the accumulator (3) such that, when a limit condition is verified, based on time history of the withdrawal temperature value representative of a delay in the fluid thermal rise at the withdrawal point in the lower sub-volume, the thermal power exchanged with the heat generator (2) is directed to an upper sub-volume of the accumulator (3) from which a heated flow exits to satisfy a user of household hot water.

4. Method according to any of the preceding claims, comprising the steps of connecting the accumulator (3) to a water network having a pressurization such to be transmitted to the accumulator (3) and to provide a heated water flow to the user.

## Patentansprüche

1. Regelungsverfahren zum Erhitzen von Wasser für den Hausgebrauch, umfassend die folgenden Vorgänge:
- eine Heizeinheit (1) für den Hausgebrauch bereitstellen, die einen ersten Wärmetauscher (4) im Wärmeaustausch mit einem Wärmeerzeuger (2) umfasst, einen Speicher (3) für ein Fluid, der durch den Wärmeerzeuger (2) erwärmt wird, um die Anforderung von heißem Wasser für den Hausgebrauch durch einen Benutzer zu erfüllen, der über einen Umwälzkreislauf (5) mit dem Wärmetauscher (4) verbunden ist,
eine Auswahleinheit (6), die mit einem an den Wärmetauscher (4) angeschlossenen Ausgang und mit Eingängen ausgestattet ist, die an mindestens zwei entlang der vertikalen Richtung beabstandeten Abholstellen angeschlossen sind, um jeweilige erste und zweite überlagerbare sekundäre Volumina des Speichers (3) zu definieren, die jeweils durch die jeweilige Abholstelle begrenzt ist, mit mehreren Temperatursensoren (S1, S2, S3, S4, S5), die entlang der vertikalen Richtung im Speicher (3) beabstandet sind), um die Temperatur an den Abholstellen zu messen, wobei ein erwärmter Durchfluss, um die Anforderung von heißem Wasser für den Hausgebrauch durch einen Benutzer zu erfüllen, das erste Sekundärvolumen verlässt;
- einen Zustand der Heizeinheit (1) erreichen, in dem:
- der Wärmeerzeuger (2) aktiv ist, um einen Umwälzstrom durch den Wärmeerzeuger (2) zu erwärmen;
- der Umwälzstrom fließt durch das erste und zweite Sekundärvolumen des Speichers (3) durch den Umwälzkreis (5) und die Auswahleinheit (6), um die Abholtemperatur des zweiten Sekundärvolumens, die durch einen der Mehrheit von Sensoren geregelt wird, bis zu einem ersten vorbestimmten Wert, der eine erste Temperaturschwelle darstellt, zu bringen;
- wenn eine Grenzbedingung auftritt, basierend auf dem zeitlichen Verlauf des Abholtemperaturwerts, der für eine Verzögerung des Anstiegs der Fluidtemperatur an der Abholstelle im zweiten Sekundärvolumen steht, der sich in einer niedrigeren vertikalen Position als die des ersten Sekundärvolumens befindet, ist die Grenzbedingung eine Verzögerung der Abholtemperatur beim Erreichen der ersten Temperaturschwelle an der Abholstelle im zweiten Sekundärvolumen dar, wodurch die Auswahleinheit (6) in eine Position bewegt wird, die das zweite Sekundärvolumen des Akkumulators (3) aus dem Umwälzkreis (5) derart ausschließt, dass die mit den Wärmeerzeugern (2) ausgetauschte Wärmeenergie auf das erste Sekundärvolumen gerichtet ist.

2. Verfahren nach Anspruch 1, umfassend die folgenden Vorgänge:
- die Durchflussrückführung im Umwälzkreislauf (5) und den Wärmetauscher (2) aktiv halten, bis die Abholtemperatur der Auswahleinheit (6) eine zweite Temperaturschwelle erreicht, die höher als die erste Temperaturschwelle ist.

3. Verfahren nach Anspruch 2, umfassend die folgenden Vorgänge:
- die Auswahleinheit (6) in eine weitere Position schalten, um ein niedrigeres Sekundärvolumen des Akkumulators (3) aus dem Umwälzkreis (5) auszuschließen, wenn also eine Grenzbedingung anhand einer Zeithistorie eines Abholtemperaturwerts überprüft wird, der für eine Verzögerung beim Erhöhen der Temperatur des Fluides an der Abholstelle im unteren Sekundärvolumen repräsentativ ist, wobei die mit dem Wärmeerzeuger (2) ausgetauschte Wärmeenergie auf ein oberes Sekundärvolumen des Speichers (3) gerichtet ist, aus dem ein erwärmter Strom herausfließt, um einen Benutzer von häuslichem Warmwasser zu befriedigen.

4. Verfahren nach einem der vorhergehenden Ansprüche, umfassend die Vorgänge des Verbindens des Akkumulators (3) mit einem Wassernetz mit einem Druck, der auf den Akkumulator (3) übertragen werden soll, und um dem Benutzer einen erwärmten Wasserfluss bereitzustellen.

## Revendications

1. Procédé de régulation du chauffage de l'eau à usage domestique, comprenant les opérations suivantes:
- préparer un groupe de chauffage (1) à usage domestique comprenant un premier échangeur de chaleur (4) en échange de chaleur avec un générateur de chaleur (2), un accumulateur (3) pour un fluide chauffé par le générateur de chaleur (2) afin de satisfaire la demande d'eau chaude à usage domestique par un utilisateur et connecté par un circuit de recirculation (5) à l'échangeur de chaleur (4),
une unité de sélection (6) équipée d'une sortie connectée à l'échangeur de chaleur (4) et d'entrées connectées en au moins deux points de prélèvement espacés suivant la direction verticale de manière à définir des premiers et deuxièmes volumes respectifs secondaires superposable de l'accumulateur (3), dont chacun est délimité par le point de prélèvement respectif, une pluralité de capteurs de température (S1, S2, S3, S4, S5) espacés le long de la direction verticale dans l'accumulateur (3) pour mesurer la température aux points de prélèvement, avec un flux chauffé pour satisfaire un utilisateur d'eau chaude à usage domestique sortant du premier volume secondaire,
- atteindre un état de l'unité de chauffage (1) dans lequel:
- le régénérateur de chaleur (2) est actif de manière à chauffer un flux de recirculation à travers le générateur de chaleur (2);
- le flux de recirculation traverse les premiers et deuxièmes volumes secondaires de l'accumulateur (3) à travers le circuit de recirculation (5) et l'unité de sélection (6), afin d'amener la température de prélèvement du deuxième volume secondaire, contrôlée d'un capteur appartenant à la pluralité de capteurs, jusqu'à une première valeur prédéterminée qui constitue un premier seuil de température;
- lorsqu'une condition limite se produit, basée sur l'histoire temporelle de la valeur de la température de prélèvement, représentative d'un retard dans l'augmentation de la température du fluide au point de prélèvement dans le deuxième volume secondaire, situé dans une position verticale inférieure à celle du premier volume secondaire, la condition limite constitue un retard de la température de prélèvement pour atteindre le premier seuil de température au point de prélèvement dans le deuxième volume secondaire, déplaçant l'unité de sélection (6) dans une position telle qu'elle exclut le deuxième volume secondaire de l'accumulateur (3) provenant du circuit de recirculation (5), de sorte que l'énergie thermique échangée avec les générateurs de chaleur (2) est dirigée vers le premier volume secondaire.

2. Méthode selon la revendication 1, comprenant les opérations de :
- maintenir en circulation le flux dans le circuit de recirculation (5) et le générateur de chaleur (2) actif jusqu'à quand la température de prélèvement de l'unité de sélection (6) atteint un deuxième seuil de température supérieur au premier seuil de température.

3. Méthode selon la revendication 2, comprenant les opérations de :
- commuter l'unité de sélection (6) dans une autre position de manière à exclure du circuit de recirculation (5) un volume secondaire inférieur de l'accumulateur (3), donc lorsqu'une condition limite est vérifiée, sur la base d'un historique de temps d'une valeur de température de prélèvement représentative d'un délai dans l'augmentation de la température du fluide au point de prélèvement dans le volume secondaire inférieur, l'énergie thermique échangée avec le générateur de chaleur (2) est dirigée vers un volume secondaire supérieur de l'accumulateur (3) d'où s'écoule un flux chauffé pour satisfaire un utilisateur d'eau chaude sanitaire.

4. Procédé selon l'une des revendications précédentes, comprenant les opérations de connexion de l'accumulateur (3) à un réseau d'eau avec une pression telle qu'elle soit transmise à l'accumulateur (3) et pour fournir un flux d'eau chauffé à l'utilisateur.
